# EUROPEAN PATENT APPLICATION

(11) **EP 0 855 656 A2**
(43) Date of publication of application: **29.07.1998**
(21) Application number: 98300378.1
(22) Date of filing: 20.01.1998
(51) Int. Cl.: G06F 17/00

(54) **Method and system for query processing in a relational database**

(30) Priority: 27.01.1997 US 791444
(71) Applicant: INTERNATIONAL BUSINESS MACHINES CORPORATION, Armonk, NY 10504 (US)
(72) Inventor: Agarwal, Ramesh Chandra, New York, New York 10162 (US); Jhingran, Anant Deep, Elmsford, New York 10523 (US); Malkemus, Timothy Ray, Round Rock, Texas 78681 (US); Padmanabhan, Sriram Kolijivadi, Briarcliff Manor, New York 10510 (US)
(74) Representative: Waldner, Philip

(57) **Abstract**

A method and system is presented for constructing and applying a query processing tree to a relational database. The method/system comprises an automated approach for building a vector block of records using data in multiple input records derived from the relational database and then applying at least one vector operator of the query processing tree to the vector block of records. The approach can also include creating the query processing tree to have multiple vector operators. When applying the query processing tree, multiple vector blocks of records may be employed at the same vector operator or different vector operators. A vector descriptor control block associated with a vector block of records is employed to transfer control of the vector block of records from a first vector operator to a second vector operator in the query processing tree. The at least one vector operator in the query processing tree can comprise a table scan operator, a predicate operator, a sort operator, an aggregation operator, a join operator or a math operator.

## Description

The present invention relates in general to query processing within database systems, and in particular, to a method and system employing at least one vector operator in a query tree and at least one vector block of records built from multiple input records derived from data in one or more databases.

The following definitions are provided as framework for the discussion to follow.

Relational database systems: Relational databases and software that manages relational databases.

Relational database: A collection of many logically connected tables or relations.

Table or relation: A collection of records or rows that have a same or similar structure.

Record, row or tuple: A logical entity described by a set of column values.

Column: A particular attribute associated with all records in a table.

SQL Query: An American National Standards Institute (ANSI) conventional approach for expressing subsets of data in a database.

Query Tree (or Query Processing Tree): A data flow execution sequence for computing a query result.

Operator: A specific node in a query tree.

Block of Records: A set of records logically connected together.

As explained in detail below, database query processing is typically achieved by sequentially applying an SQL Query comprising a scalar operator tree to each record of a set of databases. The processing mode is for each record to enter the chain of scalar operators and proceed up the chain as determined by the operations of the query tree. The control flow for execution is typically top down, wherein an operator higher up (consumer operator) calls its input operator(s) (producer operator(s)) to produce records for it to consume. Each operator, if it has the input that it needs, processes the input and returns the control to the calling operator. Otherwise, it calls the operator below it to generate the input. When an operator requires a set input and the scalar operator below it generates only records, then the lower operator is called repeatedly. When an operator operates on a set, it is conventionally implemented by the operator calling the operator below in a loop until the lower operator returns "no new record".

Unfortunately, the traditional scalar approach to query processing in a database can be time intensive. The main penalty in database systems typically comes from the overhead of operator calls. This is especially disadvantageous in the traditional approach because the operators get called per record, even for operators that require a set as an input. This is because their input is built one record at a time and typically the operator is implemented incrementally on that one record.

Thus, a need exists in database processing art for a novel technique for constructing and processing a query tree in a database system in a more efficient manner.

Briefly summarized, the present invention comprises in one aspect a method for applying a query processing tree to a relational database. The method includes: building a vector block of records using data from multiple input records derived from the relational database; and applying at least one vector operator of the query processing tree to the vector block of records. As an enhancement, the at least one vector operator could comprise multiple vector operators, including a first vector operator and a second vector operator. In this case, the method comprises applying the first vector operator of the query processing tree to the vector block of records, passing control of the vector block of records from the first vector operator to the second vector operator, and then applying the second vector operator of the query processing tree to the vector block of records.

In another aspect, the present invention provides a method for processing a relational database. The method includes: creating a query processing tree with at least one vector operator; and applying the at least one vector operator to a vector block of records derived from data in the relational database. The method can further include building the vector block of records using data from multiple input records derived from the relational database. Building of the vector block of records as well as applying the vector operator to the vector block of records can occur at any point within the query processing tree.

In still another aspect, the invention comprises a method for processing a query tree in a relational database. The method includes: applying a first vector operator of the query tree to a vector block of records derived from data in the relational database; and subsequent thereto, applying a second vector operator of the query processing tree to the vector block of records derived from data in the relational database. As an enhancement, this method further comprises transferring control of the vector block of records from the first vector operator to the second vector operator. This transferring of control can be facilitated via a vector descriptor control block associated with the vector block of records. Control is transferred by transferring access to the vector descriptor control block from the first vector operator to the second vector operator.

Numerous enhancements to each of the methods summarized above are described and claimed herein. Further, corresponding systems and computer program products are described and claimed.

To restate, the present invention comprises a more efficient method/system for constructing and processing a query tree in a relational database system. The approach can be used with any relational database system and can apply to various types of database operators, including scan operators, predicate operators, sort operators, aggregation operators, join operators, and math operators. The vector operator is applied to a vector block of records compiled at any time during the query processing tree. A vector block of records can be built by one vector operator with control passed to a second vector operator of the query processing tree through use of a vector descriptor control block. Advantageously, a vector operator in accordance with the invention need only be invoked once for a large number of records. Thus, the invention results in more efficient, less time consuming processing of a query within a relational database.

The subject matter which is regarded as the present invention is particularly pointed out and distinctly claimed in the concluding portion of the specification. The invention, however, both as to organization and methods of practice, together with further objects and advantages thereof, may best be understood by reference to the following detailed embodiment taken in conjunction with the accompanying drawings in which:
Fig. 1 is a general block diagram of a computer system to employ database processing concepts of the present embodiment;
Fig. 2 is a representation of a typical database system to employ processing concepts in accordance with the present embodiment;
Fig. 3 depicts an operator tree and input and output sets for a simple Structured Query Language (SQL) query;
Fig. 4 depicts a more complex operator tree to facilitate description of data and control flow during query execution;
Fig. 5 depicts operands for the operators of a simple query;
Fig. 6 depicts an execution tree in a typical database system for a sample query;
Fig. 7 depicts an execution tree for a query useful in describing the present embodiment;
Fig. 8 depicts data structures associated with vectorized operations for an operator in accordance with the present embodiment;
Fig. 9 depicts a vector descriptor control block and associated vector block of records, input record, and multiple output records in accordance with the present embodiment;
Fig. 10 is a representation of data structures when the input record values are copied over; and
Fig. 11 depicts specific data structures when input records are not copied over.

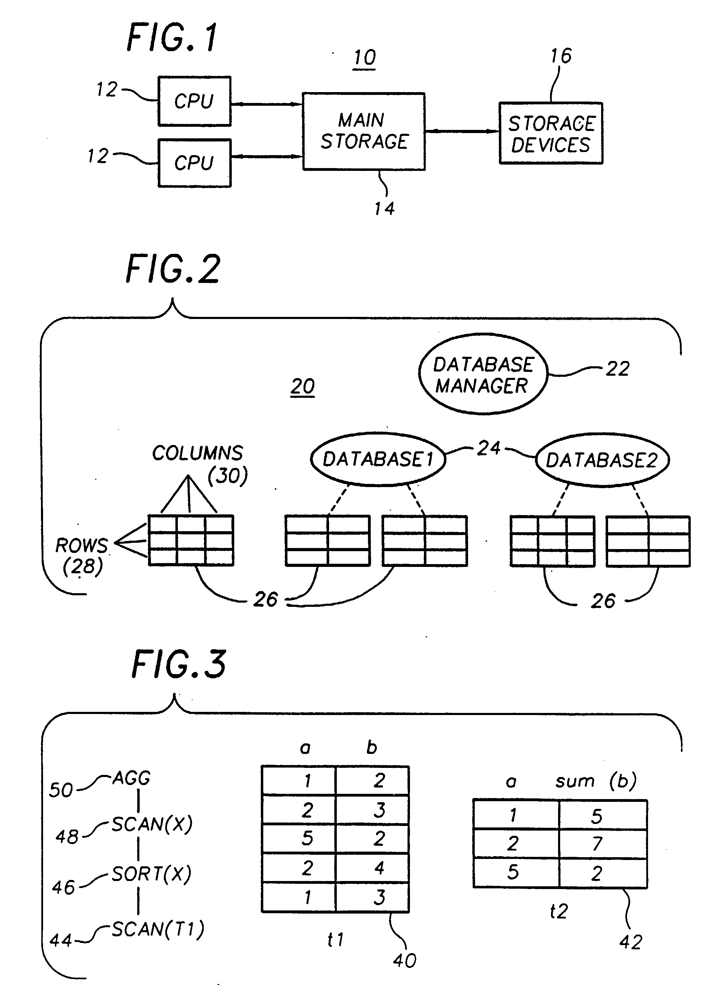

In one embodiment, the query processing facility is incorporated and used in a computer system, such as the one depicted in Fig. 1. Computer system 10 includes, for instance, one or more central processing units 12, a main storage 14 and one or more storage devices 16, each of which is described below.

As is known, central processing unit (CPU) 12 is the controlling center of computing system 10 and provides the sequencing and processing facilities for instruction execution, interruption action, timing functions, initial program loading and other machine related functions. The central processing unit executes at least one operating system, which as known, is used to control the operation of the computer by controlling the execution of other programs, controlling communication with peripheral devices and controlling use of the computer resources. The query processing facility is controlled by the operating system similar to that of other computer programs.

Central processing units 12 are coupled to main storage 14, which is directly addressable and provides for high speed processing of data by the central processing units. Main storage may be either physically integrated with the CPUs or constructed in stand alone units.

Main storage 14 is also coupled to storage device 16, which may comprise a variety of storag devices, including input/output devices, as well other types of storage devices. In one embodiment, data is transferred from main storage 14 to storage devices 16, and from the storage devices back to main storage.

One example of computer system 10 for incorporating and using the query processing facility of the present invention is an RS-6000 computer system offered by International Business Machines Corporation. This is only one example, however. The facility of the present invention can be used with other computing environments or with other computer systems.

Relational database systems such as Oracle (see, for example, ORACLE 7.0 User Manual released by Oracle Corporation of Menlo Park, California) or Sybase (e.g., reference Sybase SQL Server 11 User Manual released by Sybase Corporation of Emeryville, California) are now ubiquitous as stores for data.

As shown in Fig. 2, a relational database system 20 typically manages (22) multiple databases 24, each being a collection of many database tables 26. A table 26 comprises a collection of rows or records 28, with all records having the same or similar structure. The schema of a table describes the columns (or attributes) 30 that make up the record, including the data types (e.g., integer, character, etc.) of that column. Individual rows or records specify the actual values for each column.

Data in the database tables 26 is manipulated through INSERTS (adding new records), DELETES (removing existing records) and UPDATES (modifying existing records). The data is queried through a query language, the most popular being SQL, e.g., reference SQL 2.0 Standard, ANSI (American National Standards Institute), 1990. In SQL, the subset of data that the user is interested in is specified as
SELECT columns from (tables)
WHERE condition
The syntax of SQL will be briefly explained as relevant to the present embodiment.

In order to process a query, a database system compiles the query into an operator tree. For a simple query like:
SELECT a, sum(b) from tl group by a the operator tree, and the input and output for the query are shown in Fig. 3.

If table t1 (40) contains two columns, i.e., column a and column b, with values from five records as shown, then the results of the query would be table t2 (42) with column a and column sum(b). The answer contains, for each unique value of a, the sum of the corresponding b values from all the records that contain that value of a. The operator tree which will enable the query to return the answer is shown at the left of Fig. 3.

An operator tree is a data flow tree where the data enters the leaf node(s) and exits from the top. The control flow for execution is typically top down, wherein an operator higher up (consumer operator) calls its input operator(s) (producer operator(s)) to produce records for it to consume. The data flows from bottom up.

The SCAN(T1) operator 44 scans table tl and passes the record to the next operator, SORT(X) 46. The SORT(X) operator loops back to SCAN(T1) till all records of table tl are exhausted. Either as it sees the records from SCAN(T1), or after it has seen all the records, the SORT operator generates a sorted set of records, represented by a new temporary table, X (not shown). In this case, the records are sorted by their values of column 'a'. Control then passes to the next operator, SCAN(X) 48. This operator, like SCAN(T1) scans table X, and passes the record to the next operator, AGG 50. Since the input records are now in sorted order of the grouping column, the AGG operator can incrementally compute the new sum and return the group value and the sum when it sees a record which has a different 'a' value than it was previously handling (i.e., end of the group). Different database system have a different set of operators, but there is a general agreement based on relational algebra and SQL implementations that a set such as described below is typically implemented in commercially available database systems.

An operator in this tree takes either one input, or two. The input is either a single record, or a set of records. The following table describes the operations by various operators, i.e., what the output is as a function of input

| | | |
|---|---|---|
| Operator | Input | Output |
| PRED | Row | TRUE if row satisfies predicate, FALSE otherwise |
| AND | Two BOOL | TRUE if both inputs TRUE |
| OR | Two BOOL | TRUE if either input TRUE |
| SELECT | Row, BOOL | Row if BOOL is TRUE, NULL otherwise |
| AGG | One set | One Row which is the aggregation operation(s) applied on the set |
| SORT | One set | Reordered set (same rows, different order) |
| JOIN | Two sets | Single set which is a cross product (i.e., one row for each combination of input rows) |
| MATH | ROW | Modified Row with new column(s) indicating results of MATH operators (e.g., col1+col2) |
| ROJ | ROW | Row, with Subset of columns |
| SCAN | TABLE | Next row in the table |

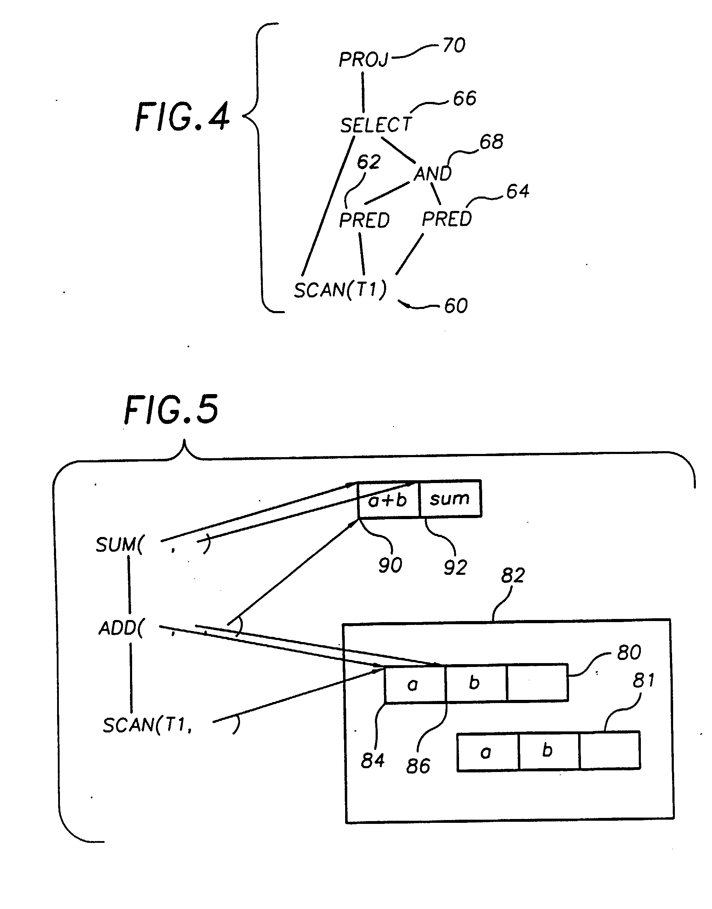

While many subtleties exist for these, this will suffice for an understanding of the present invention. An example tree for
SELECT a from t1 where b = c and e = f could be the tree of Fig. 4.

The execution of this tree is typically pull driven from the top. Each operator, if it has the input that it needs, processes the input and returns the control to the calling operator. Otherwise it calls the operator below it to generate the input. When the operator requires a set input and the scalar operator below it generates only records, then the lower operator is called repeatedly. When an operator conventionally operates on a set, it is typically implemented by the operator calling the operator below it in the tree in a loop till the operator returns "no new record". For example, in Fig. 3, the SORT operator will not pass data to the SCAN(X) operator till it exhausts all records coming from its input. The control flow is then from the consumer operator to the producer operator, and is not shown in figures for clarity.

Referring now to the example of Fig. 4, the SCAN(T1) operator 60 is as before. Operator 60 feeds three operators --PRED (b=c) 62, PRED (e=f) 64 and SELECT 66. The boolean output from PREDs is ANDed 68 and the TRUE/FALSE value is the second input to SELECT 66. SELECT loops back to SCAN if the record does not satisfy the AND of the predicates, otherwise it passes data to the next operator, PROJ 70. The PROJ operator extracts the 'a' value from the record, and then requests the SELECT operator to return it one more record. The SELECT, in turn, requests the SCAN operator, and the cycle continues until the table is exhausted. Thus, control passes back and forth between operators typically a record at a time. Note that implementation of these operators is normally through function calls. Furthermore, since there is a wide variety of input combinations (operators, data types, etc.), the operators typically require several tens of instructions even to implement simple operations such as a+b. Thus, databases tend to spend a lot of CPU cycles, per record.

A desirable thesis in database systems is to avoid copying records whenever possible. Thus, when a record flows through several operators, each operator will contain pointers to one copy of the record. Note that the width of a record (i.e., the number of columns it contains) might change as it moves up the operator tree - e.g., a MATH operator might generate new columns based on expressions of existing columns, and a PROJ operator might remove some columns as not relevant for the operators higher up on the tree. Ideally, database systems would like to carry only those columns which are required for higher operations; however, space reclamation per operator is expensive, and is therefore generally done on a per record basis only (i.e., a record typically ends up using space equal to all its real and computed columns that are required for operations on that record, and the next record uses the same space).

As shown, an operator requires certain operands. One or more operand(s) specifies the input value(s) and typically one operand specifies the output value. The input value specification is normally by associating a pointer to the input value (often that is a pointer to a particular column in a record, but it can also be a pointer to a temporary result), and the output is typically specified by a pointer where the result can be stored. The output operand of one operator is typically the input operand for an operator further up in the tree.

In Fig. 5, operators and their input and output operands are shown. The query is
select sum (a+b) from t1

The SCAN operator only requires the table as the input. The output of the scan is a pointer into the next record 80. Many records could reside on a single data page 82, and the SCAN operator iterates over all the records in a page, and then the next page, etc. The next operator, ADD takes as input column values for the two operands 'a' 84 and 'b' 86. The operands can be specified as direct pointers into appropriate columns (as shown in the figure), or as an offset into the corresponding record. The following description of the present invention will assume the latter representation. Additional information required for each operand is the length and data type of the operand. The result operand for ADD is a temporary space where a+b can be stored 90. The final operator, SUM, takes as input operand the a+b value of the current record, and computes the sum in the result operand area 92 for all the records seen. The operand pointers for SUM therefore do not change as SCAN moves onto the next record, whereas for both SCAN and ADD, the operands are directly or indirectly changed to the current record.

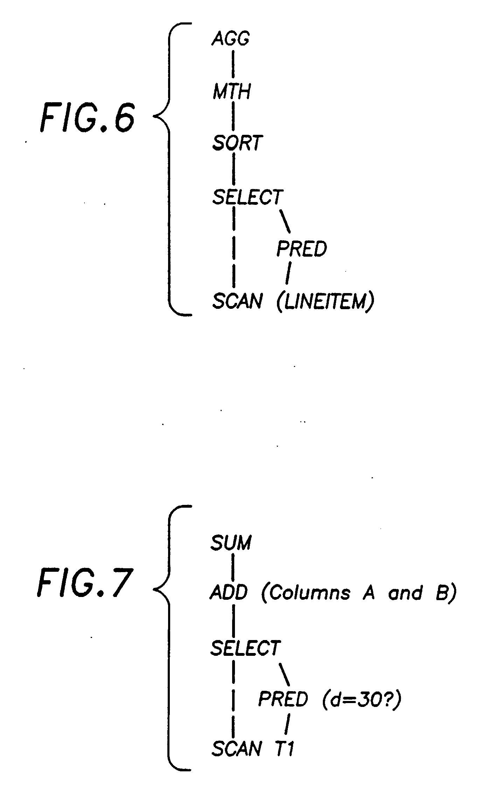

To give an idea of how expensive such database operations can be, consider Q1 in the TPCD benchmark. A simplified version of the query is
select 1_returnflag,1_statusflag,sum(L_extendedprice) from lineitem
where 1_shipdate<=date('04/09/1998')-90 days
group by 1_returnflag,1_statusflag
order by 1_returnflag,1_statusflag
The execution tree for this query in a typical database system, such as IBM's DB2 (e.g., reference DB2 Parallel Edition, IBM Software Solutions, 1995) would be as shown in Fig. 6.

As discussed above, the main penalty in database systems comes from the overhead of operator calls. This is especially disadvantageous because the operators conventionally get called per record, even for operators that require a set as an input. This is because their input is built one record at a time and typically the operator is implemented incrementally on that one record, e.g., the AGG operator computes the new SUM based on the new record it sees.

In contrast, in this embodiment, a vector block of records can be built in a first vector operator (utilizing vector block create code) and then control can be handed over to a second vector operator of a query tree. This leads to more efficient query processing, and can be applied to any typical database operator.

The present embodiment is explained below using a pseudo C like code that could achieve the same purpose as execution of a database operator tree. A simple example is first discussed.
select sum(a+b) from t1 where d = 30

Based on the above description, the database processing is essentially a recursive call to the operators, something like a pre-order traversal of the tree. However, for the purpose of this invention, an equivalent "iterative" representation is discussed, which for Fig. 7 can be shown as

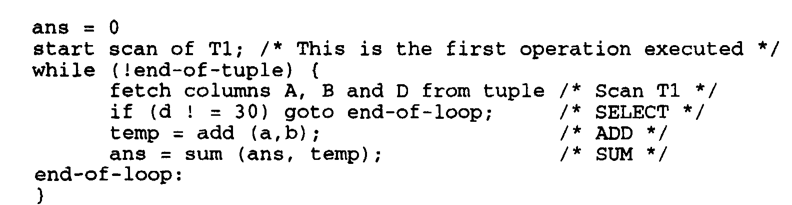

As shown, the processing mode is for every record to enter the chain of operators. However, some records will not proceed further up the chain, e.g., when they fail the SELECT evaluation. In this mode, a producer operator (i.e., an operator which is the input) needs to provide a handle to at most one record, (which might be wider or narrower than the input record depending on what the operator does) to the consumer operator.

With this invention, the processing will be as follows:

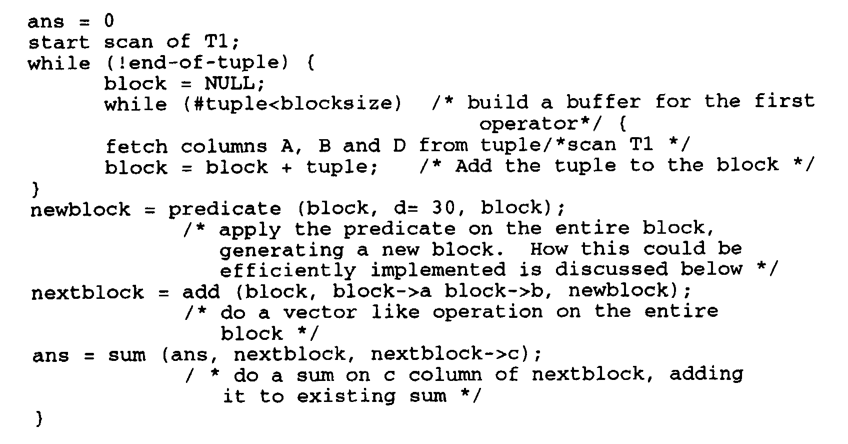

Those skilled in the art will note that instead of operators like PRED, ADD, SUM being called once for each record, the very first operator in this case SCAN, will initiate a vector block create function, which will build a "block" of records, and in this example each operator operates on this block. The terms "vector block of records" and "vector block" are used interchangeably throughout this document.

The structure of this emboddiment is to have each operator have an input block, an output block, and for the operator itself to comprise a vector operator. Thus, instead of doing operations on a single record, the operator operates on the entire block. The input block and the output block can be separate memory areas; however, two optimizations are further possible:
1. When the operator reduces the number of records, a record in a block can be marked as "eliminated", e.g., by keeping a vector of pointers or bits, (discussed later).
2. When the operator generates a new set of values (e.g., MATH operator which computes new expressions), the input operator can pre-allocate space (i.e., extend each record with blank space) into which the consumer operator can write. This is especially useful since often a chain of operators will require the same column values and it is less efficient to copy the column values from one operator to the next.

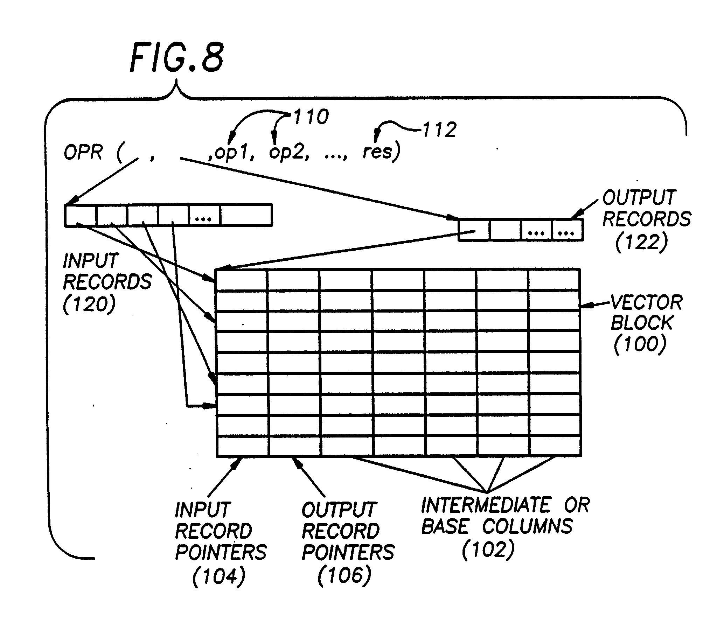

Consider a sequence of operators that traditionally would operate on a single record (some of the parameters that determine the sequence are discussed later). The data structures that would need to be passed when the operators are converted into vectorized operations in accordance with this invention are next described. Fig. 8 depicts a general purpose operator OPR.

Operators during normal database processing operate on columns of the current record. Operators in vectorized operations operate on a set or block of current records. The set of current records (and potentially their column values) is specified as a vector bock 100. The column values in the record required for different operators are either copied into the vector block at columns 102 or are kept in the base data records. In the latter case, the pointers 104 or 106 to the records (input or output operands) are kept in the vector block. By way of example, the pointers could point to input records as 80 and 81 in Fig. 4.

With the present invention, the operands shown in Fig. 4 are replaced by vector specifications. As mentioned before, an offset representation for a vector operand can be employed. The offset then is either an offset into a record in the vector block, or an offset into the data record which has not been copied. In other words, an operand can be specified by the following triplet:
(vector_table_pointer, copied?, [11/12/O], offset)
where vector_table_pointer is a pointer to the start of the vector block, copied? is a boolean value indicating whether the operand is to be found in the vector block, or using the indirection of input or output record pointers. The specific indirection column -- input or output record pointers can be determined by what type of operand it is -- input 110 or output 112, or can be explicitly specified as I1 (for left input), I2 (for right input) or O (for output). Finally, offset is the number of bytes from the start of the record where the operand value can be found. Typically, if not obvious from OPR, the number of bytes in the operand and its data type may need to be specified.

One more auxiliary data structure is needed for each input and output record specification. Certain operators (e.g., PRED) reduce the number of records. Consequently, even if starting with a chain of operators on a full vector block, some of the records could be eliminated by different operators in the chain. Therefore, there is a need to be able to indicate which of the records in the vector table are required for operators higher up in the chain that use the same vector block. The INPUT RECORDS data structure 120 is one such way, wherein an array of current record numbers is maintained. A record number is basically the position of that record in the vector block. OUTPUT RECORDS 122 is a similar structure for the result operand. There are other options for subsetting the set of valid records in a vector block, and one more option is discussed further below.

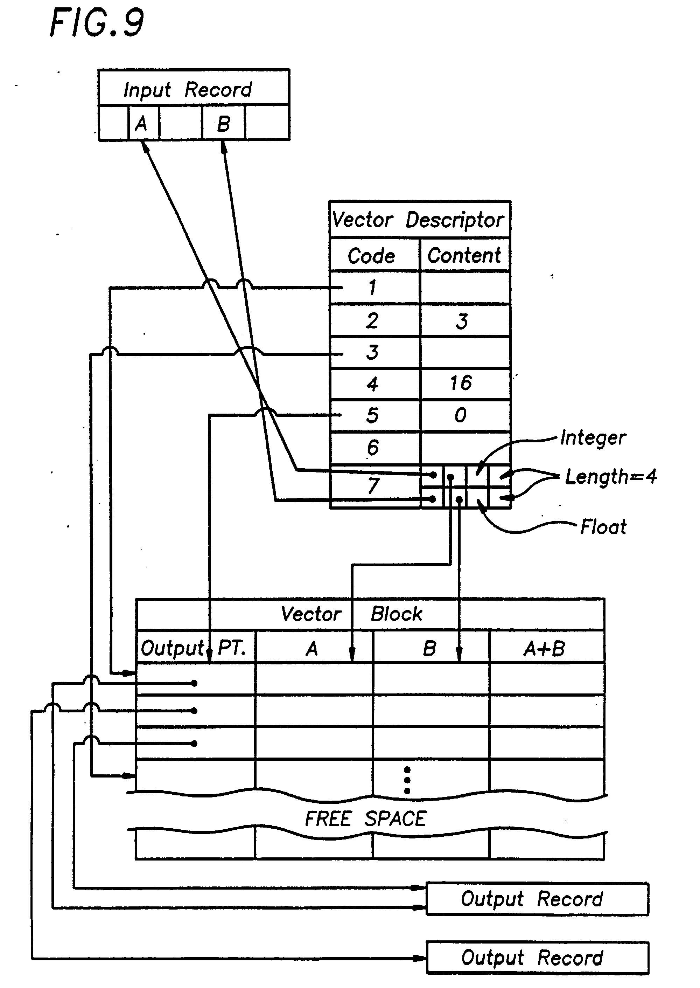

Fig. 9 depicts one embodiment of a vector descriptor control block in accordance with the present embodiment. This control block is associated with a vector block of records as shown. The vector descriptor is an in-memory control block that contains all the information about a vector block and its contents needed by vector operators to perform their function. In this example, the vector descriptor control block information is coded as follows:
code 1: address of the vector block. This is also the address of the first vector record in the vector block, i.e., if the vector block is not empty.
code 2: number of vector records in the vector block, three being arbitrarily chosen for example.
code 3: address of the location of the next vector record to be added to the vector block, if any. This is n bytes beyond the address of the last vector record in the vector block, where n is the size of each vector record. This example assumes that the vector records are of equal size.
code 4: size of each vector record, again 16 being chosen by way of example only.
code 5: offset to output record pointer. Each vector record will have a field containing the address of the output record that the vector record pertains to, if required for the particular use of the vector block. For example, this would be necessary for a grouping operation where each vector record contains data belonging to one of several possible groups.
code 6: offset to input record pointer, i.e., if required.
code 7: information required to create each vector record.
   This information might include a list of addresses and sizes of input values to be placed in the vector records, and their offsets in the vector record, i.e., what to copy and where to copy it, for each vector record.

Control of a vector block of records is passed from a first vector operator to a second vector operator in a query processing tree by transferring control of the associated vector descriptor control block. This is accomplished by providing the second vector operation with access to the vector descriptor, e.g., by way of a pointer. The vector descriptor control block is compiled at the query input phase. The information in the control block is then employed during vector operations to access the vector block of records.

The vector block options summarized above are discussed in further detail below.

### Vector Block

A central theme in vector processing in accordance with the present embodiment is the existence of one or more temporary table(s), which contains various temporary columns as well as record pointers. This block of records or table is referred to herein as a vector table or vector block 100. A vector table is a storage area which can be thought of as N temporary records of M bytes each. In Fig. 8, N=9 and M=28, i.e. assuming each column is four bytes long. Here N is the maximum vector size, and M is the maximum number of bytes that may be needed per record. A vector block is typically created at the beginning of a query processing, e.g., using vector block create code which can be produced by one of ordinary skill in the art given the teachings herein, and may remain active till the end of the query. However, in the general case, a block of records may be created (allocated) and destroyed (deallocated) at any point in the query processing.

Another way to look at it is that this storage area can be reformatted at various stages of query processing. At any point i during query processing, it can be thought of as area of N(i) by M(i) bytes, where N(i)*M(i) is no more than temp area available for this vector block. This also raises the possibility of having more than one active vector table at a time. In some queries such as JOINs, it may be more efficient to have different vector tables corresponding to different database input tables (the tables being joined) and output tables (tables being created).

### Vector Column

A vector column is defined by an offset into the vector table and potentially the data type and length. The offset can be anything from 0 to M-1. However, for efficiency, it is best to specify offsets on word boundaries. This definition of a vector column allows for reuse of the table space. For example, an 8 byte space can be used as two 4- byte integers for one operation and the same space can be used as an 8-byte floating point number in another operation. The database compiler keeps track of record space usage. The first two vector columns in Fig. 8 contain pointers to records, and the last five contain actual column values for each record.

### Vector Operand

A vector operator typically operates on one or more vector operands and may produce vector operand(s) as output. Some of these operands are vector columns, and others may be scalar operands (as in conventional scalar operators). The result could also be a scalar operand (as in an aggregate). When the operand is a vector column, it can be either resident in the vector block (when copied? is set to TRUE) or accessed indirectly via the input or output pointers. A special case of accessing records indirectly could be by accessing the next N records.

The following scenarios are possible.

A vector column operand has a fixed data type and width (to be specified as operands in the vector op code).

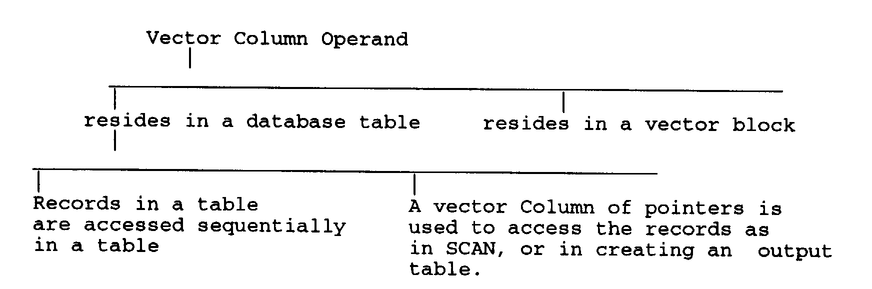

The actual choice between copying/pointing to data records is a performance tradeoff. Copying can be made very cheap based on some optimizations.
1. Consider an input record 't' with columns (a(4), b(4), c(8), d(8), e(8), f(2)). The numbers in () indicate the size of the column. Assume that the next operator requires columns a, b, e, and f. In that case, instead of copying 4 columns, one at a time, two memory copies, one of 8 bytes starting at offset of column a, and a second of 10 bytes starting at column e can be employed. Since long copies are almost as efficient as a single small copy, the number of instructions in this case will have been effectively halved.
2. Assume that the next two operators are a+e and b+f. Clearly, the block operations on them will require 16 bytes (8 for each sum). Instead of allocating new space for them, the entire record can be copied in one memory copy into the block with bytes 8-15 used for columns a and b, and bytes 16-23 for columns e and f.

### Record Subsetting

Not all the record values in a vector column operand need to be used by a vector operator. The exact subset can be specified in many ways.

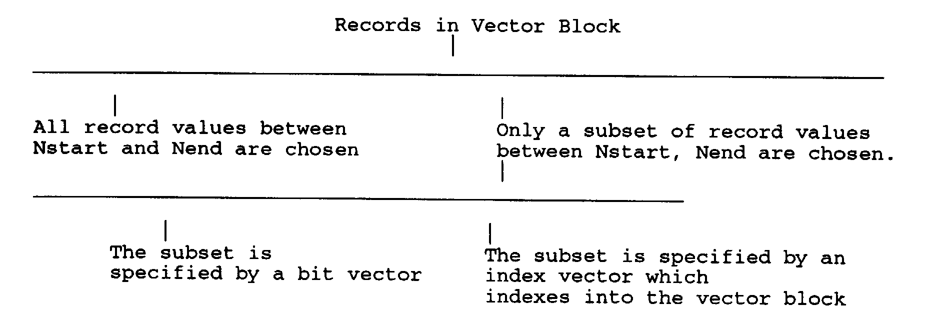

Another mechanism to choose a subset of a vector column is via indirect addressing. There is a separate storage area which contains indices for the vector block. These indices choose a subset of the records in a vector block. To facilitate equivalent of the logical operations such as "or", "and", and "not", on the bit vector, these indices are always stored in an ordered form. Thus, "anding" a bit vector is equivalent to taking the subset of common indices from the two index vectors. The index vector approach is more efficient compared to the bit vector approach only if a small set of records is chosen or equivalently when the density of one's in a bit vector is low. In performing a vector operation under a bit vector mask, all bits have to be examined. Examining a specific bit in a vector of bits is rather expensive. This overhead is proportional to the total number of bits (vector length). Using the index vectors, the overhead is proportional to the number of non-zeros or active rows in the table. If index vectors are stored as memory pointers into the vector block, then there is no additional cost in indirect addressing.

### Vector operator Examples

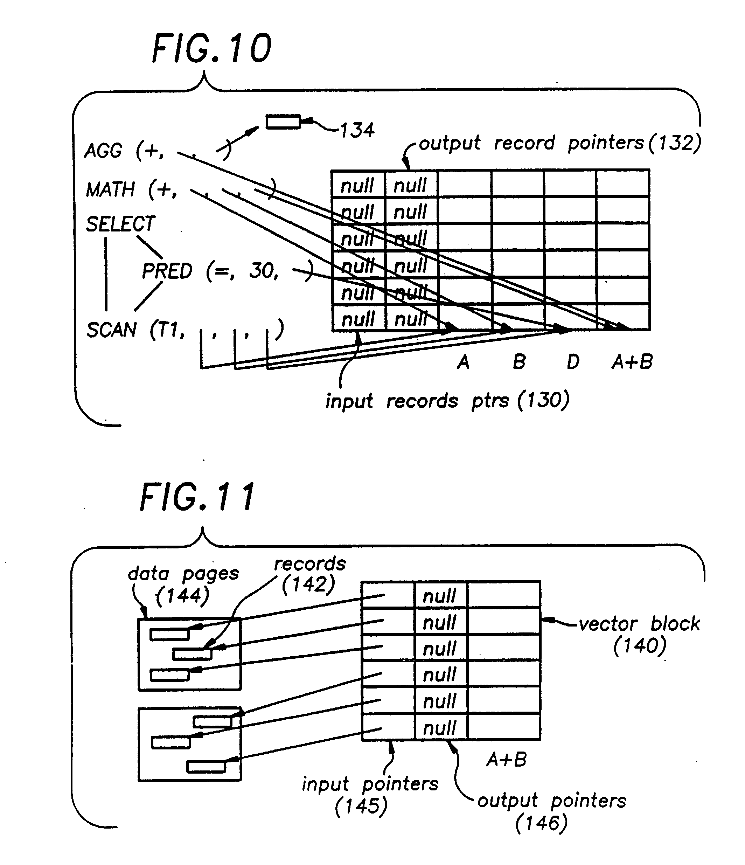

Details of some of the operators in their vectorized format are next discussed. Fig. 10 is a representation for data structures when the input record values are copied over and a bit map is used. The query to be executed is select sum (a + b) from t1 wherein d = 30. In Fig. 10, a vector consists of a set of records. Each record contains columns that are relevant to the chain of operators -- thus, A, B, D and A+B. Since column values are copied over from the input data records, the input data records point 130 to NULL. Similarly, all output computation on vectors are stored in this vector area, so the output record points 132 also point to NULL.

The operator SCAN takes as input:
TABLE (in this case T1)
COLUMNS that need to be copied over (their offset/type/length in input records and their offset/type/length in the output vector) -- indicated by three pointers to vector columns A, B and D as output columns.
SCAN also sets a bitmap which contains all 1's (the bitmap is not shown).

The Operator PRED takes as input:
RELOP (the operator, in this case=)
The left hand side, in this case a constant 30
The right hand side, in this case the vector of D values.

The output of PRED is the bitvector (not shown) which has 0's where the predicate is not true.
SELECT in this case is a no-op.
MATH takes as input:
OP (the operator, in this case +)
The operands, in this case, the vector columns A and B
The result, in this case, the vector column which contains the result A+B
AGG takes as input:
OP (in this case, SUM)
The operand, i.e., vector column containing A+B
The result (which is stored in a temp variable, 134).

An implementation when the input records are not copied over would involve a vector area which looks like Fig. 11.

In this example, the vector area 140 contains space for only one column, A+B. In addition, input records 142 are provided where records sit in memory representations 145 of data/disk pages 144. The output record column 146 still contains only NULLs. Most of the structure of the vector operations remains the same as in Fig. 10 and is not shown for clarity.

The SORT and JOIN operators are next examined.

### SORT

In this case, input is a set of N records in a table and output is an index vector, which indexes into the input table. Alternatively, the output can be a table consisting of sorted key columns along with the index vector. This is helpful when sort is blocked for memory and several sub-sorts are carried out on sections of the table. The sorted (key, index) tables can then be merged to produce a single sorted table. One can define a vector sort-merge operator which merges two sorted vectors.

A vector permutation operation can also be defined by one skilled in the art which generates an output table, by indexing into an input table using an index vector. This will typically be used to permute a table according to an index on a key generated during sort. Moving rows from one table to another table can be done very efficiently in a loop mode, using an index vector either on input or on output. A C program in a single call can do the entire operation with essentially no overhead, provided that the tables are pinned in memory and row pointers are available.

### Vector Join Operator (on sorted keys - Merge Join)

It is assumed that the two tables have been sorted (or indexed) on the desired key and the two tables are being joined where keys are equal. In this case, three vector tables will be assumed, one each corresponding to the two input tables and another corresponding to the output table. Initially, each of the two input vector tables will have N rows or records, each from the two input tables. In the general case, N could be different for the two tables. The concept of "current processing index pointers" is also introduced. These pointers keep track of the status of the join operation between the tables. Initially, both input vector tables are loaded with one block (relevant columns) each from the input tables. Then a vector join operator is called. This operator returns under one of the following conditions: processing has been exhausted on one of the input tables or the output vector table is full.

If the output vector table is full, its contents are transferred to the output table. Similarly, if one of the input vector tables has been exhausted, then another block is copied from the appropriate input table into the corresponding vector table and processing is resumed. Thus, in a vector join operation, control passes back and forth between consumers and producers, till the processing is exhausted.

### Vector Join Operator (Nested Loop Join)

A nested loop join is logically a cross product. Each of the input tables can be blocked into several blocks. Let K1 and K2 be the number of blocks in the two input tables. Then, logically, the cross product on the two tables is equivalent to K1xK2 vector cross products. Each vector cross product is processed as above except that there is no ordering on a key. With this scheme, a vector nested loop join appears similar to a vector merge join. In vector merge joins, the input tables are accessed sequentially, and there is no need to backtrack on previous blocks. However, in a nested loop join, a vector operator is called for all possible combinations KlxK2 of vector blocks from the two input tables.

Those skilled in the art will note from the above discussion that the present invention comprises a more efficient method/system for constructing and processing a query tree in a relational database system. The approach can be used with any relational database system and can apply to various types of database operators, including scan operators, predicate operators, sort operators, aggregation operators, join operators, and math operators. The vector operator is applied to a vector block of records compiled at any time during the query processing tree. A vector block of records can be built by one vector operator with control passed to a second vector operator of the query processing tree through use of a vector descriptor control block. Advantageously, a vector operator in accordance with the invention need only be invoked once for a large number of records. Thus, the invention results in more efficient, less time consuming processing of a query within a relational database.

The present invention can be included in one or more computer program products comprising computer usable media, in which the media include computer readable program code means for providing and facilitating the mechanisms of the present invention. Products can be included as part of a computer system or sold separately. One of ordinary skill in the art could readily implement the concepts presented based upon the disclosure set forth above.

In summary, there is described, a method and system for constructing and applying a query processing tree to a relational database. The method/system comprises an automated approach for building a vector block of records using data in multiple input records derived from the relational database and then applying at least one vector operator of the query processing tree to the vector block of records. The approach can also include creating the query processing tree to have multiple vector operators. When applying the query processing tree, multiple vector blocks of records may be employed at the same vector operator or different vector operators. A vector descriptor control block associated with a vector block of records is employed to transfer control of the vector block of records from a first vector operator to a second vector operator in the query processing tree. The at least one vector operator in the query processing tree can comprise a table scan operator, a predicate operator, a sort operator, an aggregation operator, a join operator or a math operator.

Although specific embodiments of the present invention have been illustrated in the accompanying drawings and described in the foregoing detailed description, it will be understood that the invention is not limited to the particular embodiments described herein, but is capable of numerous rearrangements, modifications and substitutions without departing from the scope of the invention. The following claims are intended to encompass all such modifications.

## Claims

1. A method for applying a query processing tree to a relational database, said method comprising:
(a) building a vector block of records using data in multiple input records derived from the relational database; and
(b) applying at least one vector operator of the query processing tree to the vector block of records.

2. The method of claim 1, wherein the at least one vector operator comprises multiple vector operators, including a first vector operator and a second vector operator, and wherein said method further comprises applying the first vector operator of the query processing tree to the vector block of records, passing control of the vector block of records from the first vector operator to the second vector operator, and then applying the second vector operator of the query processing tree to the vector block of records.

3. The method of claim 1 or 2, wherein said vector block of records building step (a) is accomplished by said first vector operator.

4. The method of claim 2, wherein said building of the vector block of records includes employing a vector descriptor as a control block for accessing the vector block of records, and wherein said passing control of the vector block of records from the first vector operator to the second vector operator comprises passing access to the vector descriptor control block from the first vector operator to the second vector operator.

5. The method of claim 4, wherein said building step (a) comprises building a vector block of records to have multiple vector records, and building at least one output record for the multiple vector records of the vector block or records.

6. The method of claim 5, wherein the vector block of records of said building step (a) includes a column for a pointer to the at least one output record and multiple columns containing data from the multiple input records.

7. The method of any of claims 1 to 6, further comprising preallocating memory at compile time for the vector block.

8. The method of any of claims 1 to 7 wherein the at least one vector operator comprises at least one of a scan operator, a predicate operator, a sort operator, an aggregation operator, a join operator and a math operator.

9. The method of any of claims 1 to 8 further comprising accomplishing said steps (a) & (b) at any point in processing of the query processing tree.

10. The method of any of claims 1 to 9 wherein said building step (a) comprises building n additional vector blocks of records, wherein n > 1, using data from multiple input records derived from the relational database, and wherein said at least one vector operator of said applying step (b) comprises multiple vector operators, each vector operator of said multiple vector operators being applied to at least one of the vector block of records and the n additional vector blocks of records.

11. A method for processing a relational database, said method comprising:
(a) creating a query processing tree with at least one vector operator; and
(b) applying the at least one vector operator to a vector block of records derived from data in the relational database.

12. A method for processing a query tree in a relational database, said method comprising:
(a) applying a first vector operator of the query tree to a vector block of records derived from data in the relational database; and
(b) subsequent to said applying step (a), applying a second vector operator of the query tree to the vector block of records derived from data in the relational database.

13. A system for applying a query processing tree to a relational database, said system comprising:
means for building a vector block of records using data from in multiple input records derived from the relational database; and
means for applying at least one vector operator of the query processing tree to the vector block or records.

14. The system of claim 13, wherein said vector block of records comprises multiple columns, at least one column of said multiple columns containing pointers to output records for vector records of the vector block of records, and wherein said means for building further comprises means for building the output records for the vector records of the vector block of records.

15. A computer program product comprising a computer usable medium having computer readable program code means therein for use in applying a query processing tree to a relational database, said computer readable program code means in said computer program product comprising:
computer readable program code means for causing a computer to effect building of a vector block of records using data from multiple input records derived from the relational database; and
computer readable program code means for effecting applying of at least one vector operator of the query processing tree to the vector block of records.

16. The computer readable program code means of claim 15, wherein the at least one vector operator comprises multiple vector operators, including a first vector operator and a second vector operator, and wherein said computer readable program code means for effecting applying of the at least one vector operator comprises computer readable program code means for effecting applying of the first vector operator of the query processing tree to the vector block of records, passing control of the vector block of records from the first vector operator to the second vector operator, and applying the second vector operator of the query processing tree to the vector block of records.
